# EUROPEAN PATENT APPLICATION

(11) **EP 1 653 457 A2**
(43) Date of publication of application: **03.05.2006**
(21) Application number: 05256589.2
(22) Date of filing: 24.10.2005
(51) Int. Cl.: G11B 7/085

(54) **Recording and reproducing device with guide shaft attaching mechanism**

(30) Priority: 29.10.2004 JP 2004316475
(71) Applicant: ORION ELECTRIC CO., Ltd., Fukui 915-8555 (JP)
(72) Inventor: Hara, Hirotoshi Intellectual Property Dept., Echizen-city Fukui 915-8555 (JP)
(74) Representative: Paget, Hugh Charles Edward

(57) **Abstract**

To provide a guide shaft attaching structure for a disk device in which the number of components can be reduced, a guide shaft is attached easily, and only a small attaching space is required. The guide shaft attaching structure is characterized in that a fixed end 4 of a torsion spring 2 is locked to a rear side of a chassis 5, a coil portion 1 is held by a spring holding section 3, a biasing end 8 of the torsion spring 2 is locked in a locking section 9, a guide shaft 6 is inserted between left and right positioning projections 7 and set to be located above the biasing end 8, and the guide shaft 6 is fastened by a screw 13. A disk of the screw 13 is not biased by the biasing end 8 at a point when screwing of the screw 13 is started.

## Description

### BACKGROUND OF THE INVENTION

### Field of the Invention

The present invention relates to an attaching mechanism for attaching, in the inside of a disk device for writing or reading of information, a guide shaft for guiding a pickup unit in a radial direction of a disk to a traverse chassis so as to be adjustable in height.

### Description of the Related Art

A disk device rotates a recording medium such as a disk with a turn table in the inside of an apparatus and slides a pickup unit in a radial direction of the disk to read or write information. What carries out a role of guiding the pickup unit in this case is a guide shaft. The guide shaft is attached to a traverse chassis.

A guide shaft attaching structure for the disk device is roughly divided into a system for attaching a guide shaft according to displacement of a chassis, a screw fastening system, a spring locking system, and a system for biasing a guide shaft with a spring and fastening the guide shaft with a screw. For example, Japanese Patent Laid-Open Publication No. 2002-50137 (Patent Document 6) discloses the chassis displacement system, Japanese Patent Laid-Open Publication Nos. 7-57404, 11-126440, 11-288564, 2000-149466, and 2002-334528 (patent documents 1, 3, 4, 5 and 8) disclose the screw fastening system, Japanese Patent Laid-Open Publication Nos. 7-161152 and 2002-92898 (patent documents 2 and 7) disclose the spring locking system, and Japanese Patent Laid-Open Publication Nos. 2002-367189 and 2002-367301 (patent documents 9 and 10) disclose the spring biasing and screw fastening system. Among these systems, height is adjustable only in the attaching structure of the spring biasing and screw fastening system.

It is possible to use a compression spring, a leaf spring, a torsion spring, and the like for the spring biasing and screw fastening system. The systems disclosed in patent documents 9 and 10 are systems of a type using the leaf spring. Among these springs, the torsion spring can bias an attached guide shaft with most stable force and also bias the guide shaft with most stable force in adjusting height thereof.

When the torsion spring is used for attachment of the guide shaft, first, the torsion spring is held on the traverse chassis. Then, a tip of the torsion spring is rotated in a compressing direction. The guide shaft is set in an attachment position in a state in which the torsion spring is kept compressed by some gig or component. The guide shaft is fastened by a spring. Finally, height of the guide shaft is adjusted to complete the attachment. The guide shaft is attached to the traverse chassis to be adjustable in height through biasing by the torsion spring and fastening by a screw.

The conventional guide shaft attaching structure, which uses a torsion spring and is capable of adjusting height of the guide shaft, has several problems. One of the problems is that, since a component or a gig for locking the tip of the torsion spring rotated in the compressing direction is required and a space for the component or the gig has to be secured, a reduction in size of an entire traverse unit is hindered. In addition, the tip of the torsion spring has to be rotated in the compressing direction, the guide shaft has to be set in the attachment position in a state in which the torsion spring is kept compressed by some gig or component, and the guide shaft has to be fastened by the screw while holding the torsion spring. Therefore, guide shaft attachment work is not easy. Moreover, when the guide shaft is subjected to biasing force of the spring before screwing is started, it is not easy to start screwing.

### SUMMARY OF THE INVENTION

It is an object of the invention to solve the problems and provide a guide shaft attaching structure for a disk device in which means for holding a torsion spring at the time of attachment of a guide shaft can be realized without increasing the number of components, attachment of the guide shaft can be performed easily, it is unnecessary to secure a space for a component for holding the torsion spring in a traverse chassis, it is possible to reduce a size of an entire traverse unit, and it is easy to start screwing.

A recording and reproducing device with a guide shaft attaching mechanism according to claim 1 is a recording and reproducing device including: a pickup unit that reads information written in a recording medium and/or writes information in the recording medium; a guide shaft that supports the pickup unit so as to be movable; a support section that supports an end of the guide shaft; and a chassis with which the support section is integrally formed. The recording and reproducing device is characterized in that vertically-projected positioning projections, which support sides of the guide shaft, are formed in the support section, biasing means, which applies biasing force to the guide shaft, and fastening means, which fastens the guide shaft to the support section, are provided near the support section, a biasing means holding section for holding the biasing means is formed in the chassis, and a locking section, which controls the biasing force of the biasing means to be fixed and makes it possible to lock the biasing means, is formed integrally with the support section.

A recording and reproducing device with a guide shaft attaching mechanism according to claim 2 is characterized in that, in the recording and reproducing device with a guide shaft attaching mechanism according to claim 1, a torsion spring is used as the biasing means for applying biasing force to the guide shaft, an end and a coil portion of the torsion spring are held by the biasing means holding section formed in the chassis, and fixed biasing force is applied to the other end of the torsion spring to lock the other end of the torsion spring to the locking section.

A recording and reproducing device with a guide shaft attaching mechanism according to claim 3 is characterized in that, in the recording and reproducing device with a guide shaft attaching mechanism according to claim 1 or 2, biasing force generated by the biasing means acts in a direction in which the guide shaft comes off the support section.

A recording and reproducing device with a guide shaft attaching mechanism according to claim 4 is characterized in that, in the recording and reproducing device with a guide shaft attaching mechanism according to claim 1, 2, or 3, a screw is used as the fastening means for fastening the guide shaft to the support section, a fastening hole formed to pierce through the chassis and the support section is formed, and the screw is screwed in a direction in which a fastening force acts against the biasing force.

A recording and reproducing device with a guide shaft attaching mechanism according to claim 5 is characterized in that, in the recording and reproducing device with a guide shaft attaching mechanism according to claim 1, 2, 3, or 4, a rise-up part, which is formed in substantially an L-shape by continuously forming a support portion erected vertically and a holding portion projected horizontally, is formed in the chassis as the biasing means holding section for holding the biasing means.

A recording and reproducing device with a guide shaft attaching mechanism according to claim 6 is characterized in that, in the recording and reproducing device with a guide shaft attaching mechanisms according to claim 1, 2, 3, 4, or 5, the locking section for controlling biasing force of the biasing means to be fixed and locking the biasing means is formed in a hook shape and formed integrally with the support section of the guide shaft and locks the biasing means in a position lower than the positioning projections of the guide shaft.

### BRIEF DESCRIPTION OF THE DRAWINGS

FIG. 1 is a front view representing a state in which a coil portion of a torsion spring is held by a spring holding section, a fixed end of the torsion spring is locked to a rear side of a chassis, and a biasing end of the torsion spring is locked in a locking section.
FIG. 2 is a front view representing a state in which a guide shaft is held between left and right positioning projections of a support section and set at the biasing end of the torsion spring.
FIG. 3 is a front view representing a state in which screwing of a screw in a screw fastening hole of the chassis is started.
FIG. 4 is a front view representing a state in which the screw is fastened to adjust height of the guide shaft.
FIG. 5 is a bottom view representing a state in which the guide shaft is held between the left and the right positioning projections of the support section and set at the biasing end of the torsion spring.
FIG. 6 is a side view representing a state in which the screw is fastened to adjust height of the guide shaft.
FIG. 7 is a diagram for explaining a disk device including a chassis, a guide shaft, a pickup unit, and a turn table.
FIG. 8 is a plan view representing a chassis assembled with a guide shaft and a pickup unit.

### DETAILED DESCRIPTION OF THE PREFERRED EMBODIMENTS

An example of a best mode for carrying out a guide shaft attaching structure of a disk device according to the invention will be hereinafter explained with reference to the drawings. However, the invention is not limited to this embodiment.

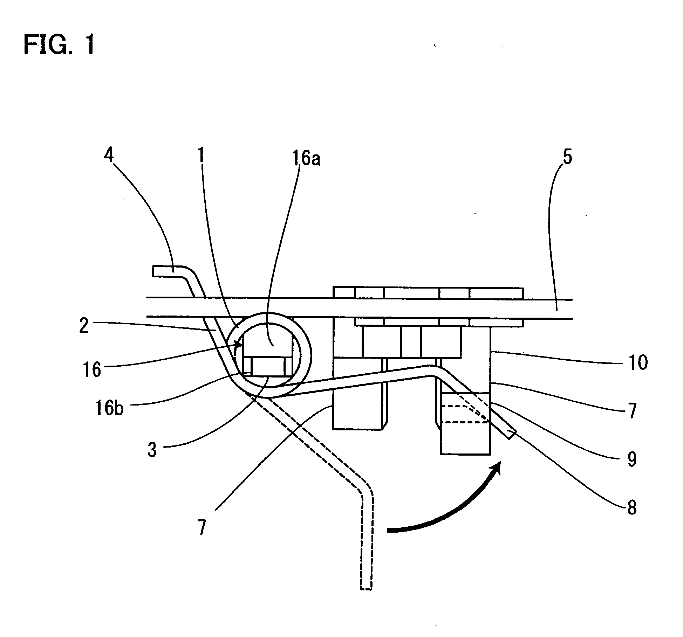

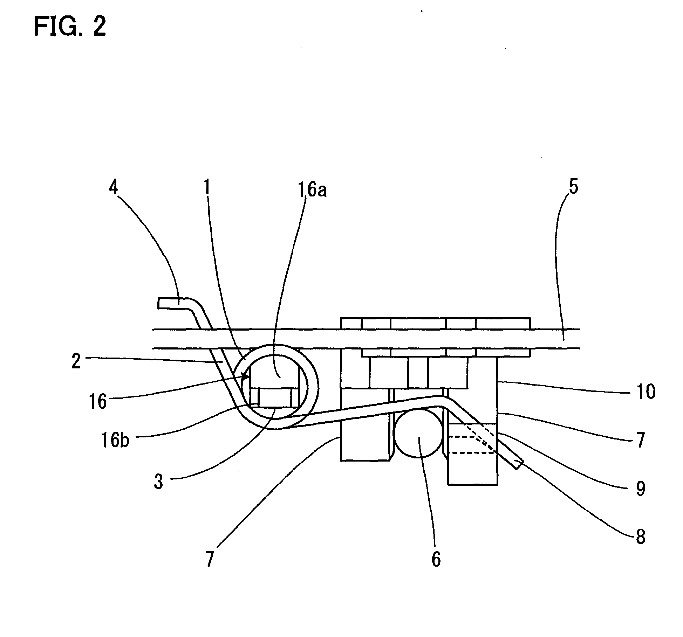

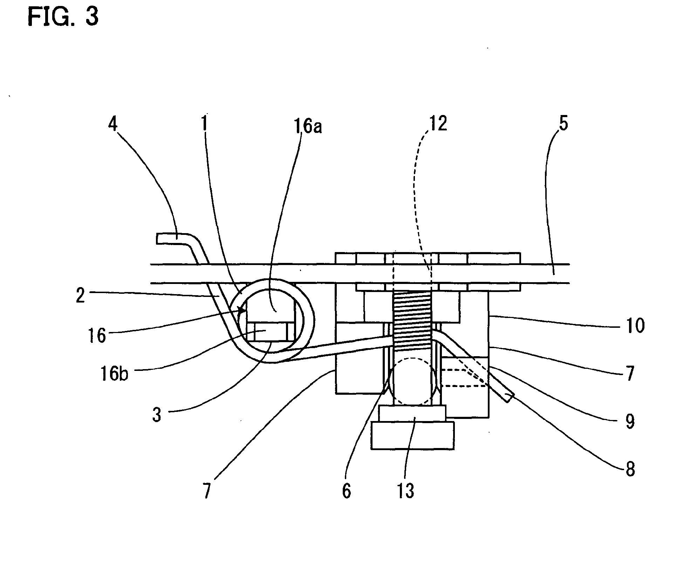

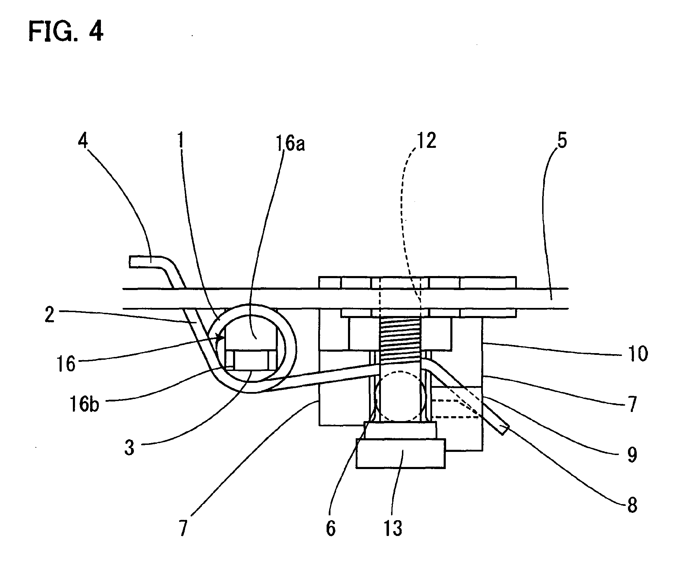

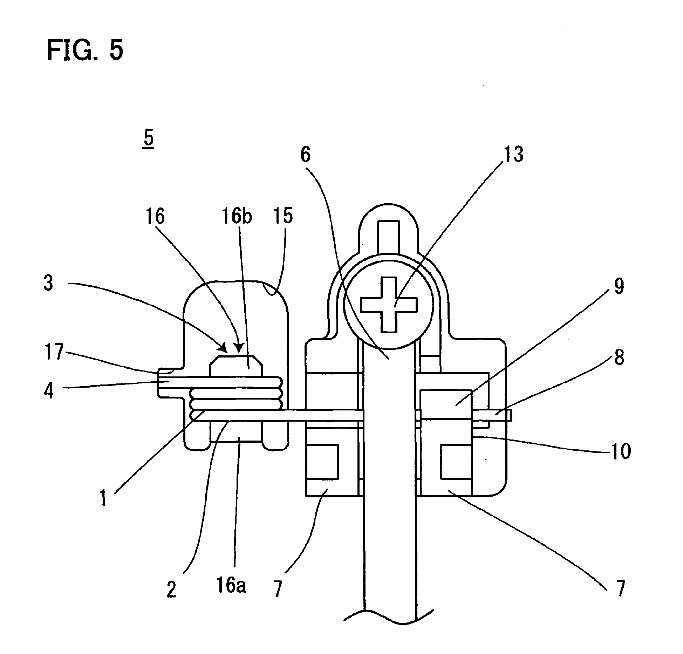

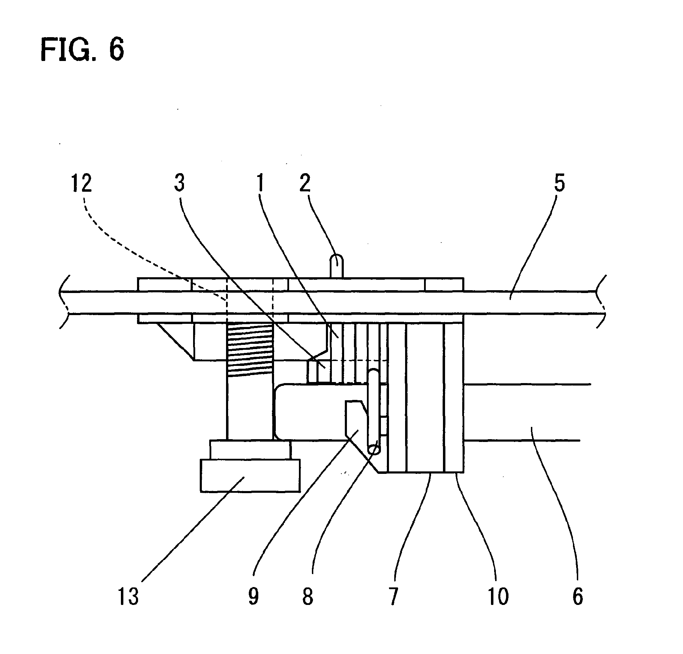

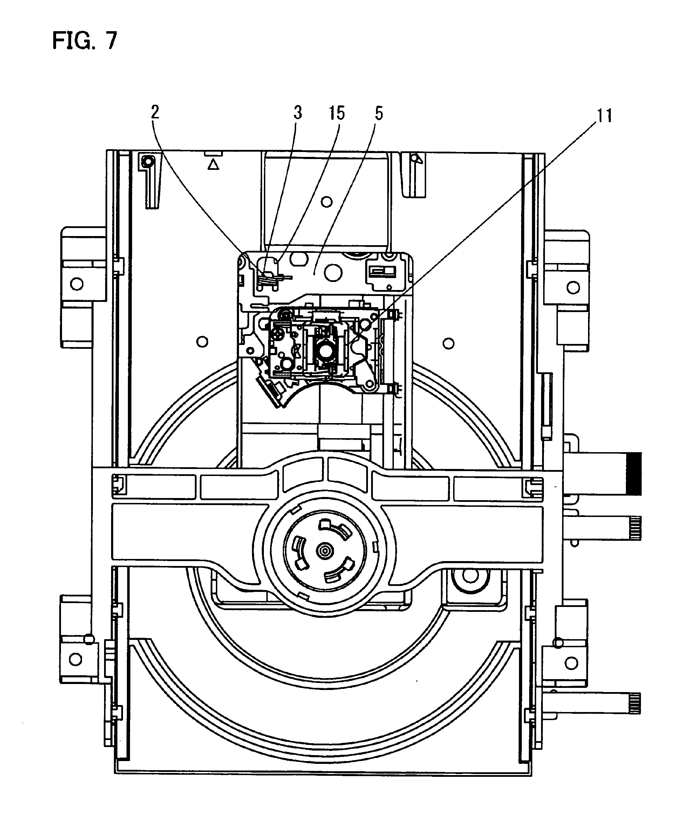

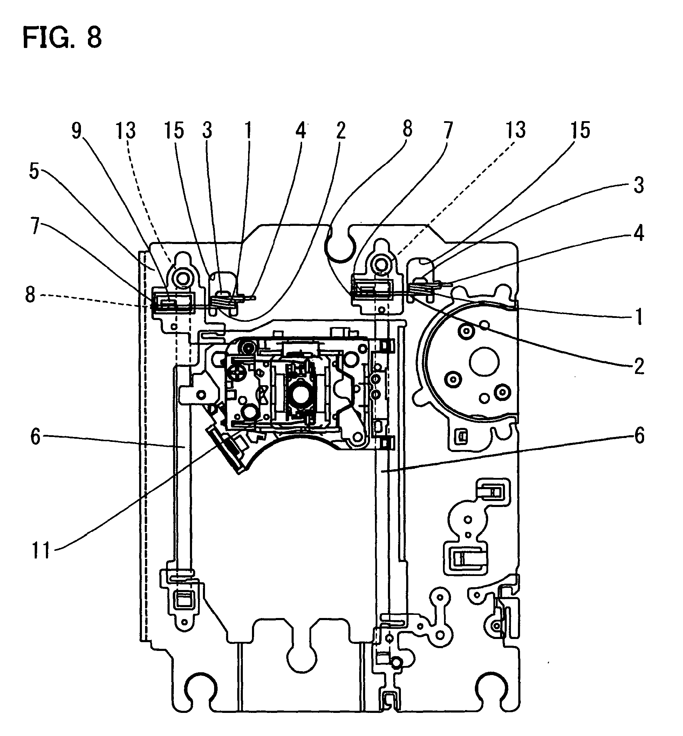

FIG. 1 is a front view representing a state in which a coil portion of a torsion spring according to the invention is held by a spring holding section, a fixed end of the torsion spring is locked to a rear side of a chassis, and a biasing end of the torsion spring is locked in a locking section. FIG. 2 is a front view representing a state in which a guide shaft is held between left and right positioning projections of a support section and set at the biasing end of the torsion spring. FIG. 3 is a front view representing a state in which screwing of a screw in a screw fastening hole of the chassis is started. FIG. 4 is a front view representing a state in which the screw is fastened to adjust height of the guide shaft. FIG. 5 is a bottom view representing a state in which the guide shaft is held between the left and the right positioning projections of the support section and set at the biasing end of the torsion spring. FIG. 6 is a side view representing a state in which the screw is fastened to adjust height of the guide shaft. FIG. 7 is a diagram for explaining a disk device including a chassis, a guide shaft, a pickup unit, and a turn table. FIG. 8 is a plan view representing a chassis assembled with a guide shaft and a pickup unit.

As shown in the figures, a spring holding unit 3 is formed in a chassis 5. A support section 10 is formed integrally with the chassis 5 beside the spring holding section 3 by outsert molding. A screw fastening hole 12 is formed behind the support section 10. The spring holding section 3 consists of a rise-up part 16 that is formed in substantially an L-shape by continuously forming a support portion 16a erected vertically from a hole section 15 formed in the chassis 5 and a holding portion 16b projected horizontally from a tip of the support portion 16a. A slit 17 for positioning a fixed end 4 of a torsion spring 2 serving as biasing means is formed in the hole section 15. A pair of left and right positioning projections 7 is formed in the support section 10. A locking section 9 is formed on a front surface or a rear surface of at least one of the left and the right positioning projections 7. Both the support section 10 and the spring holding section 3 are arranged forward of the screw fastening hole 12. As a front to rear arrangement relation, when the locking section 9 is formed on the front surface of the positioning projection 7, the screw fastening hole 12, the spring holding section 3 shifted laterally from the screw fastening hole 12, and the positioning projections 7 located ahead of the screw fastening hole 12 are arranged in this order from the front. When the locking section 9 is formed on the rear surface of the positioning projection 7, the screw fastening hole 12, the positioning projections 7 located ahead of the screw fastening hole 12, and the spring holding section 3 shifted laterally from the positioning projections 7 are arranged in this order from the front (only the case in which the locking section 9 is formed on the front surface of the positioning projection 7 is shown in the figures and the case in which the locking section 9 is formed on the rear surface of the positioning projection 7 is not shown). Opposed inner surfaces of the positioning projections 7 are formed vertically. An interval between the inner surfaces of the left and the right positioning projections 7 is formed to be the same as a diameter of the guide shaft 6. The locking section 9 is formed in a hook shape in order to lock a biasing end 8 of the torsion spring 2.

For attachment of the guide shaft 6, the spring holding section 3, the chassis 5 having the support section 10 formed by outsert molding, the torsion spring 2 serving as biasing means, and a screw with disk 13 serving as fastening means are used. As attachment work for the guide shaft 6, first, a coil portion 1 of the torsion spring 2 is inserted into a holding portion 16b of the spring holding section 3, the fixed end 4 of the torsion spring 2 is inserted through the hole section 15 formed by drilling of the spring holding section 3 and hooked to the slit 17 formed in the hole section 15 to be locked to the rear side of the chassis 5. The biasing end 8 of the torsion spring 2 is rotated in the compressing direction to be locked to the locking section 9 of the support section 10. The guide shaft 6 is inserted between the left and the right positioning projections 7 of the support section 10 and set to be located above the biasing end 8 of the torsion spring 2. Consequently, the positioning in the horizontal direction of the guide shaft 6 is completed. Subsequently, the screw 13 is screwed in the screw fastening hole 12. The biasing end 8 of the torsion spring 2 is locked in the locking section 9 and never comes into contact with the disk of the screw 13. Thus, the disk of the screw 13 is not subjected to biasing force by the guide shaft 6 at a point when screwing is started. It is possible to start the screwing easily. It is possible to stop movement in an axial direction of the guide shaft 6 by screwing and fastening the screw 13 in the screw fastening hole 12. In addition, it is possible to adjust height of the guide shaft 6 biased by the torsion spring 2 by pressing the tip of the guide shaft 6 with the part of the disk.

According to the recording and reproducing device with a guide shaft attaching mechanism in claim 1, the recording and reproducing device includes: a pickup unit that reads information written in a recording medium and/or writes information in the recording medium; a guide shaft that supports the pickup unit so as to be movable; a support section that supports an end of the guide shaft; and a chassis with which the support section is integrally formed. Vertically-projected positioning projections, which support sides of the guide shaft, are formed in the support section, biasing means for applying biasing force to the guide shaft and fastening means for fastening the guide shaft to the support section are provided near the support section, a biasing means holding section for holding the biasing means is formed in the chassis, and a locking section, which controls the biasing force of the biasing means to be fixed and makes it possible to lock the biasing means, is formed integrally with the support section. Thus, the locking section is formed integrally with the support section of the chassis. This makes a component or a gig for holding a biasing end of the biasing means unnecessary and makes it possible to reduce the number of components, attaching tools, and the like. The locking section for locking the biasing end of the biasing means is provided in the support section of the guide shaft. The left and right positioning projections of the support section serve as left and right holding sections in attaching the guide shaft. This makes it possible to perform attachment work for the guide shaft at the time of assembly of the traverse unit in a short time and easily and realize improvement of workability. In addition, a component or a gig for holding the biasing end of the torsion spring is made unnecessary. Thus, there is room in spaces in the traverse unit in which a large number of components are arranged densely. This makes it possible to reduce a size of the entire traverse unit and leads to a reduction in a size of the entire device.

According the recording and reproducing device with a guide shaft attaching mechanism in claim 2, in the recording and reproducing device with a guide shaft attaching mechanism according to claim 1, a torsion spring is used as the biasing means for applying biasing force to the guide shaft, an end and a coil portion of the torsion spring are held by the biasing means holding section formed in the chassis, and fixed biasing force is applied to the other end of the torsion spring to lock the other end of the torsion spring to the locking section. This makes it possible to assemble the torsion spring, which applies biasing force to the guide shaft, to the chassis simply and easily and improve workability for assembly of the torsion spring.

According to the recording and reproducing device with a guide shaft attaching mechanism in claim 3, in the recording and reproducing device with a guide shaft attaching mechanism according to claim 1 or 2, biasing force generated by the biasing means acts in a direction in which the guide shaft comes off the support section. Therefore, the guide shaft assembled to the support section is biased by the biasing means and supported stably without back-lash.

According to the recording and reproducing device with a guide shaft attaching mechanism in claim 4, in the recording and reproducing device with a guide shaft attaching mechanism according to claim 1, 2, or 3, a screw is used as the fastening means for fastening the guide shaft to the support section, a fastening hole formed to pierce through the chassis and the support section is formed, and the screw is screwed in a direction in which a fastening force acts against the biasing force. This makes it possible to easily fix the guide shaft simply by screwing the screw in the fastening hole.

According to the recording and reproducing device with a guide shaft attaching mechanism in claim 5, in the recording and reproducing device with a guide shaft attaching mechanism according to claim 1, 2, 3, or 4, a rise-up part, which is formed in substantially an L-shape by continuously forming a support portion erected vertically and a holding portion projected horizontally, is formed in the chassis as the biasing means holding section for holding the biasing means. This makes it possible to hold the biasing means to the chassis with a simple constitution.

According to the recording and reproducing device with a guide shaft attaching mechanism in claim 6, in the recording and reproducing device with a guide shaft attaching mechanisms according to claim 1, 2, 3, 4, or 5, the locking section for controlling biasing force of the biasing means to be fixed and locking the biasing means is formed in a hook shape and formed integrally with the support section of the guide shaft and locks the biasing means in a position lower than the positioning projections of the guide shaft. Thus, biasing force of the biasing means is not applied to the screw at a point when screwing is started. This makes it possible to start screwing easily in a state in which the guide shaft is held stably. Consequently, efficiency of work is improved remarkably in attaching the guide shaft.

## Claims

1. A recording and reproducing device with a guide shaft attaching mechanism comprising: a pickup unit that reads information written in a recording medium and/or writes information in the recording medium; a guide shaft that supports the pickup unit so as to be movable; a support section that supports an end of the guide shaft; and a chassis with which the support section is integrally formed,
**characterized in that** vertically-projected positioning projections, which support sides of the guide shaft, are formed in the support section, biasing means, which applies biasing force to the guide shaft, and fastening means, which fastens the guide shaft to the support section, are provided near the support section, a biasing means holding section for holding the biasing means is formed in the chassis, and a locking section, which controls the biasing force of the biasing means to be fixed and makes it possible to lock the biasing means, is formed integrally with the support section.

2. The recording and reproducing device with a guide shaft attaching mechanism according to claim 1, **characterized in that** a torsion spring is used as the biasing means for applying biasing force to the guide shaft, an end and a coil portion of the torsion spring are held by the biasing means holding section formed in the chassis, and fixed biasing force is applied to the other end of the torsion spring to lock the other end of the torsion spring to the locking section.

3. The recording and reproducing device with a guide shaft attaching mechanism according to claim 1 or 2, **characterized in that** biasing force generated by the biasing means acts in a direction in which the guide shaft comes off the support section.

4. The recording and reproducing device with a guide shaft attaching mechanism according to claim 1, 2, or 3, **characterized in that** a screw is used as the fastening means for fastening the guide shaft to the support section, a fastening hole formed to pierce through the chassis and the support section is formed, and the screw is screwed in a direction in which a fastening force acts against the biasing force.

5. The recording and reproducing device with a guide shaft attaching mechanism according to claim 1, 2, 3, or 4, **characterized in that** a rise-up part, which is formed in substantially an L-shape by continuously forming a support portion erected vertically and a holding portion projected horizontally, is formed in the chassis as the biasing means holding section for holding the biasing means.

6. The recording and reproducing device with a guide shaft attaching mechanisms according to claim 1, 2, 3, 4, or 5,
**characterized in that** the locking section for controlling biasing force of the biasing means to be fixed and locking the biasing means is formed in a hook shape and formed integrally with the support section of the guide shaft and locks the biasing means in a position lower than the positioning projections of the guide shaft.
